# EUROPÄISCHE PATENTSCHRIFT

(11) **EP 2 401 084 B1**
(45) Veröffentlichungstag und Bekanntmachung des Hinweises auf die Patenterteilung: **22.05.2019**
(21) Anmeldenummer: 10704938.9
(22) Anmeldetag: 22.02.2010
(51) Int. Cl.: B03C 1/015

(54) **CU-MO-TRENNUNG**
CU-MO SEPARATION
SÉPARATION CU-MO

(30) Priorität: 24.02.2009 EP 09153495
(43) Veröffentlichungstag der Anmeldung: 04.01.2012
(73) Patentinhaber: BASF SE, 67056 Ludwigshafen am Rhein (DE); Siemens Aktiengesellschaft, 80333 München (DE)
(72) Erfinder: DOMKE, Imme, 68165 Mannheim (DE); MICHAILOVSKI, Alexej, 67061 Ludwigshafen (DE); MRONGA, Norbert, 69221 Dossenheim (DE)
(74) Vertreter: BASF IP Association
(86) Internationale Anmeldenummer: PCT/EP2010/052195
(87) Internationale Veröffentlichungsnummer: WO 2010/097361

(56) Entgegenhaltungen:
- WO-A1-2009/010422
- US-A- 4 356 098
- US-A- 4 834 898

## Beschreibung

Die vorliegende Erfindung betrifft ein Verfahren zum Abtrennen wenigstens eines ersten Stoffes aus einer Mischung enthaltend diesen wenigstens einen ersten Stoff, wenigstens einen zweiten Stoff und wenigstens einen dritten Stoff, wobei die zu behandelnde Mischung zunächst mit wenigstens einem Kohlenwasserstoff in einer Menge von 0,01 bis 0,4 Gew.-%, bezogen auf die Summe aus Mischung und wenigstens einem Kohlenwasserstoff, in Kontakt gebracht wird, diese Mischung weiter in Kontakt mit mindestens einem hydrophoben Magnetpartikel gebracht wird, so dass sich der Magnetpartikel und der wenigstens eine erste Stoff anlagern und dieses Agglomerat von dem wenigstens einen zweiten Stoff und dem wenigstens einen dritten Stoff durch die Anwendung eines Magnetfeldes abgetrennt wird, und gegebenenfalls anschließend der wenigstens eine erste Stoff, bevorzugt quantitativ, von dem Magnetpartikel getrennt wird, wobei bevorzugt der Magnetpartikel wieder in den Prozess zurückgeführt werden kann.

Insbesondere betrifft die vorliegende Erfindung ein Verfahren zur Abtrennung wenigstens eines Werterzes aus einer Mischung in Gegenwart wenigstens eines weiteren Werterzes und der Gangart. Verfahren zum Abtrennen von Werterzen aus Mischungen enthaltend diese sind aus dem Stand der Technik bereits bekannt.

WO 02/0066168 A1 betrifft ein Verfahren zur Abtrennung von Werterzen aus Mischungen enthaltend diese, in dem Suspensionen oder Aufschlämmungen dieser Mischungen mit Partikeln, welche magnetisch und/oder schwimmfähig in wässrigen Lösungen sind, behandelt werden. Nach Zugabe der magnetischen und/oder schwimmfähigen Partikel wird ein Magnetfeld angelegt, so dass die Agglomerate von der Mischung abgetrennt werden. Der Grad der Anbindung der magnetischen Partikel an die Werterze und die Stärke der Bindung ist jedoch nicht ausreichend, um das Verfahren mit genügend hoher Ausbeute und Effektivität durchzuführen.

US 4,657,666 offenbart ein Verfahren zur Anreicherung von Werterzen, wobei das in der Gangart vorliegende Werterz mit magnetischen Partikeln umgesetzt wird, wodurch sich aufgrund der hydrophoben Wechselwirkungen Agglomerate bilden. Die magnetischen Partikel werden durch Behandlung mit hydrophoben Verbindungen auf der Oberfläche hydrophobiert, so dass eine Anbindung an das Werterz erfolgt. Die Agglomerate werden dann durch ein magnetisches Feld von der Mischung abgetrennt. Das genannte Dokument offenbart auch, dass die Werterze mit einer oberflächenaktivierenden Lösung von 1 % Natrium-ethylxanthogenat behandelt werden, bevor das magnetische Teilchen zugefügt wird. Eine Trennung von Werterz und Magnetpartikel erfolgt bei diesem Verfahren durch das Zerstören der oberflächenaktivierenden Substanz, die in Form der oberflächenaktivierenden Lösung auf das Werterz aufgebracht worden ist.

US 4,834,898 offenbart ein Verfahren zum Abtrennen nicht magnetischer Materialien durch Inkontaktbringen dieser mit magnetischen Reagenzien, welche mit zwei Schichten aus oberflächenaktiven Substanzen umhüllt sind. US 4,834,898 offenbart des Weiteren, dass die Oberflächenladung der nicht magnetischen Partikel, welche abgetrennt werden sollen, durch verschiedene Arten und Konzentrationen von Elektrolytreagenzien beeinflusst werden kann. Beispielsweise wird die Oberflächenladung durch Zugabe von multivalenten Anionen, beispielsweise Tripolyphosphationen, verändert.

S. R. Gray, D. Landberg, N. B. Gray, Extractive Metallurgy Conference, Perth, 2 - 4 October 1991, Seiten 223 - 226 offenbart ein Verfahren zur Rückgewinnung von kleinen Goldpartikeln durch Inkontaktbringen der Partikel mit Magnetit. Vor dem Inkontaktbringen werden die Goldteilchen mit Kalium-amylxanthogenat behandelt. Ein Verfahren zum Abtrennen der Goldteilchen von wenigstens einem hydrophilen Stoff wird in diesem Dokument nicht offenbart.

WO 2007/008322 A1 offenbart einen magnetischen Partikel, welcher auf der Oberfläche hydrophobiert ist, zur Abtrennung von Verunreinigungen von mineralischen Substanzen durch magnetische Separationsverfahren. Gemäß WO 2007/008322 A1 kann der Lösung oder Dispersion ein Dispergiermittel, ausgewählt aus Natriumsilikat, Natriumpolyacrylat oder Natriumhexametaphosphat zugegeben werden.

WO 2009/010422 A1 offenbart ein Verfahren zur Erzanreicherung mittels hydrophober fester Oberflächen. Hydrophobe Oberflächen sind dabei eine Platte oder ein Laufband oder die Summe der Oberfläche vieler beweglicher Teilchen.

Aufgabe der vorliegenden Erfindung ist es, ein Verfahren bereitzustellen, durch das wenigstens ein erster Stoff aus Mischungen enthaltend wenigstens einen ersten Stoff, wenigstens einen zweiten Stoff und wenigstens einen dritten Stoff effizient abgetrennt werden kann, wobei der wenigstens eine erste Stoff und der wenigstens eine zweite Stoff einen gleichen bzw. ähnlichen Charakter aufweisen. Beispielsweise können der wenigstens eine erste Stoff und der wenigstens eine zweite Stoff jeweils ionische Verbindungen mit gleichem Anion aber verschiedenen Kationen sein, beispielsweise zwei Sulfide von verschiedenen Übergangsmetallkationen. Des Weiteren ist es eine Aufgabe der vorliegenden Erfindung, den abzutrennenden wenigstens einen ersten Stoff so zu behandeln, dass das Anlagerungsprodukt zwischen magnetischem Partikel und erstem Stoff genügend stabil ist, um eine hohe Ausbeute an erstem Stoff bei der Abtrennung zu gewährleisten, ohne dass gleichzeitig eine große Menge an zweitem Stoff mit abgetrennt wird.

Diese Aufgaben werden gelöst durch ein Verfahren zum Abtrennen wenigstens eines ersten, hydrophoben oder hydrophobierten Stoffes aus einer Mischung umfassend diesen wenigstens einen ersten, hydrophoben oder hydrophobierten Stoff, wenigstens einen zweiten, hydrophoben oder hydrophobierten Stoff und wenigstens einen dritten, hydrophilen Stoff, wobei der wenigstens eine erste, hydrophobe oder hydrophobierte Stoff eine größere Hydrophobie aufweist als der wenigstens eine zweite, hydrophobe oder hydrophobierte Stoff, umfassend wenigstens die folgenden Schritte:
(A) Inkontaktbringen der Mischung enthaltend wenigstens eines ersten, hydrophoben oder hydrophobierten Stoffes aus einer Mischung umfassend diesen wenigstens einen ersten, hydrophoben oder hydrophobierten Stoff, wenigstens einen zweiten, hydrophoben oder hydrophobierten Stoff und wenigstens einen dritten, hydrophilen Stoff mit wenigstens einem Kohlenwasserstoff in einer Menge von 0,01 bis 0,4 Gew.-%, bezogen auf die Summe aus Mischung und wenigstens einem Kohlenwasserstoff, gegebenenfalls in Gegenwart wenigstens eines Dispersionsmittels,
   wobei der wenigstens eine Kohlenwasserstoff eine organische chemische Verbindung ist, die aus Kohlenstoff, Wasserstoff und gegebenenfalls Sauerstoff aufgebaut ist,
(B) gegebenenfalls Zugabe wenigstens eines Dispersionsmittels zu der in Schritt (A) erhaltenen Mischung, um eine Dispersion zu erhalten,
(C) Behandeln der Dispersion aus Schritt (A) oder (B) mit wenigstens einem hydrophoben Magnetpartikel, so dass sich der wenigstens eine erste, hydrophobe oder hydrophobierte Stoff und der wenigstens eine Magnetpartikel anlagern,
(D) Abtrennen des Anlagerungsproduktes aus Schritt (C) von der Mischung durch Anlegen eines magnetischen Feldes,
(E) gegebenenfalls Spalten des abgetrennten Anlagerungsproduktes aus Schritt (D), um den wenigstens einen ersten, hydrophoben oder hydrophobierten Stoff und den wenigstens einen Magnetpartikel separat zu erhalten.

Im Rahmen der vorliegenden Erfindung werden Stoffe als "hydrophob", bezeichnet, deren Oberfläche gegenüber Wasser einen Kontaktwinkel von mehr als 90° bildet. Je größer der sich ausbildende Kontaktwinkel ist, desto hydrophober ist der Stoff. Im Rahmen der vorliegenden Erfindung werden Stoffe als "hydrophil", bezeichnet, deren Oberfläche gegenüber Wasser einen Kontaktwinkel von weniger als 90° bildet. Je kleiner der sich ausbildende Kontaktwinkel ist, desto hydrophiler ist der Stoff.

Erfindungsgemäß können der wenigstens eine erste und gegebenenfalls der wenigstens eine zweite Stoff gegebenenfalls durch Zugabe eines Hydrophobierungsmittels hydrophobiert werden, um eine für das erfindungsgemäße Verfahren geeignete Hydrophobie aufzuweisen.

In einer bevorzugten Ausführungsform des erfindungsgemäßen Verfahrens sind der wenigstens eine erste Stoff und der wenigstens eine zweite Stoff hydrophobe oder hydrophobierte Metallverbindungen oder Kohle, und der wenigstens eine dritte Stoff ist eine hydrophile Metallverbindung.

Somit sind der wenigstens eine abzutrennende erste Stoff und der wenigstens eine zweite Stoff bevorzugt Metallverbindungen ausgewählt aus der Gruppe der sulfidischen Erze, der oxidischen und/oder carbonathaltigen Erze, beispielsweise Azurit [Cu₃(CO₃)₂(OH)₂], oder Malachit [Cu₂[(OH)₂|CO₃]]), oder der Edelmetalle, wobei der wenigstens eine erste Stoff bevorzugt hydrophober als der wenigstens eine zweite Stoff ist.

Die wenigstens eine dritte Stoff, der in der erfindungsgemäß zu behandelnden Mischung vorliegt, ist bevorzugt eine hydrophile Metallverbindung ausgewählt aus der Gruppe bestehend aus oxidischen und hydroxidischen Metallverbindungen, beispielsweise Siliziumdioxid SiO₂, Silikate, Alumosilikate, beispielsweise Feldspate, beispielsweise Albit Na(Si₃Al)O₈, Glimmer, beispielsweise Muskovit KAl₂[(OH,F)₂AlSi₃O₁₀], Granate (Mg, Ca, Fe^{II})₃(Al, Fe^{III})₂(SiO₄)₃, Al₂O₃, FeO(OH), FeCO₃, Fe₂O₃, Fe₃O₄ und weitere verwandte Mineralien und Mischungen davon.

Beispiele für erfindungsgemäß einsetzbare sulfidische Erze sind z.B. ausgewählt aus der Gruppe der Kupfererze bestehend aus Covellit CuS, Molybdän(IV)-sulfid, Chalkopyrit (Kupferkies) CuFeS₂, Bornit Cu₅FeS₄, Chalkozyt (Kupferglanz) Cu₂S, Pentlandit (Ni,Fe)S, Pyrrhotit Fe₁₋ₓS, Pyrit FeS₂ und Mischungen davon.

In dem erfindungsgemäßen Verfahren werden demnach bevorzugt unbehandelte ErzMischungen eingesetzt, welche aus Minenvorkommen gewonnen werden.

Ganz besonders bevorzugte erste Stoffe sind ausgewählt aus der Gruppe bestehend aus Molybdän(IV)sulfid, Pyrrhotit Fe₁₋ₓS, Chalkopyrit (Kupferkies) CuFeS₂, Bornit Cu₅FeS₄ und Mischungen davon. Weitere Beispiele für den wenigstens einen ersten Stoff, der durch das erfindungsgemäße Verfahren abgetrennt wird, sind Edelmetalle. Beispielsweise Au, Pt, Pd, Rh etc. bevorzugt im gediegenen Zustand.

Ganz besonders bevorzugte zweite Stoffe sind ausgewählt aus der Gruppe bestehend aus Kupfersulfiden, beispielsweise Chalkopyrit (Kupferkies) CuFeS₂, Covellit CuS, Cu₂S, Pyrit FeS₂, und Mischungen davon.

Je nach eingestellten Bedingungen (pH, Redoxpotential der Suspension etc.) können CuS, Cu₂S, ZnS, PbS, Bornit Cu₅FeS₄ entweder zu den ersten oder zu den zweiten Stoffen gezählt werden. Dies ist dem Fachmann bekannt.

Die vorliegende Erfindung betrifft auch ein erfindungsgemäßes Verfahren wobei der wenigstens eine erste Stoff ein sulfidisches Molybdänerz ist und der wenigstens eine zweite Stoff ein sulfidisches Kupfererz ist.

Die vorliegende Erfindung betrifft des Weiteren auch ein erfindungsgemäßes Verfahren wobei der wenigstens eine erste Stoff Chalkopyrit (Kupferkies) CuFeS₂ und der wenigstens eine zweite Stoff ZnS ist.

Die vorliegende Erfindung betrifft des Weiteren auch ein erfindungsgemäßes Verfahren wobei der wenigstens eine erste Stoff Cu₂S und der wenigstens eine zweite Stoff Pyrit FeS₂ ist.

Die vorliegende Erfindung betrifft auch ein erfindungsgemäßes Verfahren, wobei der wenigstens eine dritte Stoff ausgewählt ist aus der Gruppe bestehend aus oxidischen und hydroxidischen Metallverbindungen.

Ganz besonders bevorzugte dritte Stoffe sind ausgewählt aus Siliziumdioxid SiO₂, Feldspat (Ba,Ca,Na,K,NH₄)(Al,B,Si)₄O₈, Kalkstein CaCO₃, Dolomit (Ca,Mg)CO₃, Glimmer KAl₂[AlSi₃O₁₀(OH)₂], Olivin (Mg,Mn,Fe)₂[SiO₄], Tonmineralien und Mischungen davon.

Zusätzlich zu den genannten Verbindungen können in den Mischungen auch Sulfide anderer Metalle als Kupfer vorliegen, beispielsweise Sulfide von Eisen, Blei, Zink oder Molybdän, d. h. FeS/FeS₂, PbS, ZnS. Des Weiteren können in den erfindungsgemäß zu behandelnden Erzmischungen oxidische Verbindungen von Metallen und Halbmetallen, beispielsweise Silikate oder Borate oder andere Salze von Metallen und Halbmetallen, beispielsweise Phosphate, Sulfate oder Oxide/Hydroxide/Carbonate und weitere Salze vorliegen, beispielsweise Azurit [CU₃(CO₃)₂(OH)₂], Malachit [Cu₂[(OH)₂(CO₃)]], Baryt(BaSO₄), Monacit((La-Lu)PO₄).

Somit enthält eine besonders bevorzugte Mischung, die in dem erfindungsgemäßen Verfahren behandelt wird, Molybdän(IV)sulfid, Chalkopyrit (Kupferkies) CuFeS₂ oder Cu₂S als ersten Stoff, Kupfersulfid, beispielsweise CuS und/oder Cu₂S, ZnS oder Pyrit FeS₂ als zweiten Stoff und Siliziumdioxid SiO₂ und gegebenenfalls weitere Oxide und/oder Hydroxide als dritten Stoff.

In der erfindungsgemäß zu behandelnden Mischung liegt der wenigstens eine erste Stoff im Allgemeinen in einer Menge von 0,001 bis 5,0 Gew.-%, bevorzugt 0,01 bis 1 Gew.-%, besonders bevorzugt 0,01 bis 0,1 Gew.-%, jeweils gerechnet als Metall und bezogen auf die gesamte Mischung, vor.

In der erfindungsgemäß zu behandelnden Mischung liegt der wenigstens eine zweite Stoff im Allgemeinen in einer Menge von 0,1 bis 5,0 Gew.-%, bevorzugt 0,5 bis 4,0 Gew.-%, jeweils gerechnet als Metall und bezogen auf die gesamte Mischung, vor.

In der erfindungsgemäß zu behandelnden Mischung liegt der wenigstens eine dritte Stoff im Allgemeinen in einer Menge vor, so dass die Summe aus wenigstens einem ersten, wenigstens einem zweiten und wenigstens einem dritten Stoff 100 Gew.-% beträgt. Somit liegt der wenigstens eine dritte Stoff beispielsweise in einer Menge von 90,0 bis 99,9 Gew.-%, jeweils bezogen auf die gesamte Mischung, vor.

In einer bevorzugten Ausführungsform des erfindungsgemäßen Verfahrens liegt die Mischung enthaltend wenigstens einen ersten, hydrophoben oder hydrophobierten Stoff, wenigstens einen zweiten, hydrophoben oder hydrophobierten Stoff und wenigstens einen dritten, hydrophilen Stoff in Schritt (A) in Form von Partikeln mit einer Größe 100 nm bis 100 µm, beispielsweise < 125 µm, vor, siehe beispielsweise US 5,051,199. In einer bevorzugten Ausführungsform wird diese Partikelgröße durch Mahlen erhalten. Geeignete Verfahren und Vorrichtungen sind dem Fachmann bekannt, beispielsweise Nassmahlen in einer Kugelmühle.

Somit ist eine bevorzugte Ausführungsform des erfindungsgemäßen Verfahrens dadurch gekennzeichnet, dass die Mischung enthaltend wenigstens einen ersten Stoff und wenigstens einen zweiten Stoff vor oder während Schritt (A) zu Partikeln mit einer Größe von 100 nm bis 100 µm, beispielsweise < 125 µm, vermahlen wird.

Eine typischerweise eingesetzte Erzmischung, die mit dem erfindungsgemäßen Verfahren getrennt werden kann, hat die folgende Zusammensetzung: ca. 30 Gew.-% SiO₂, ca. 30 Gew.-% Feldspat, ca. 2 % FeCuS₂, ca. 0,5 % Cu₅FeS₄, ca. 0,04 Gew.-% MoS₂, Rest Chrom-, Eisen-, Titan-, Mangan- und Magnesiumoxide.

Die einzelnen Schritte des erfindungsgemäßen Verfahrens werden im Folgenden detailliert beschrieben:

### Schritt (A):

Schritt (A) des erfindungsgemäßen Verfahrens umfasst das Inkontaktbringen der Mischung enthaltend wenigstens einen ersten, hydrophoben oder hydrophobierten Stoff, wenigstens einen zweiten, hydrophoben oder hydrophobierten Stoff und wenigstens einen dritten, hydrophilen Stoff mit wenigstens einem Kohlenwasserstoff in einer Menge von 0,01 bis 0,4 Gew.-%, bezogen auf die Summe aus Mischung und wenigstens einem Kohlenwasserstoff, gegebenenfalls in Gegenwart wenigstens eines Dispersionsmittels.

Geeignete und bevorzugte erste, zweite und dritte Stoffe sind oben genannt.

Im Rahmen der vorliegenden Erfindung bedeutet Kohlenwasserstoff eine organische chemische Verbindung, die im Wesentlichen aus Kohlenstoff, Wasserstoff und gegebenenfalls Sauerstoff aufgebaut ist. Sofern in den erfindungsgemäß einsetzbaren Kohlenwasserstoffen neben Kohlenstoff und Wasserstoff auch Sauerstoff enthalten ist, liegt dieser beispielsweise in Form von Ester-, Carbonsäure- und/oder Ethergruppen vor. In Schritt (A) des erfindungsgemäßen Verfahrens kann sowohl ein im Wesentlichen einheitliche Kohlenwasserstoff als auch ein Kohlenswasserstoffgemisch eingesetzt werden.

Erfindungsgemäß einsetzbare Kohlenwasserstoffe oder -gemische weisen im Allgemeinen unter den Bedingungen des erfindungsgemäßen Verfahrens eine niedrige Viskosität auf, so dass sie unter den erfindungsgemäßen Verfahrensbedingungen flüssig und leicht beweglich sind. Bevorzugte werden Kohlenwasserstoffe oder -gemische eingesetzt, die eine Viskosität von 0,1 bis 100 cP, bevorzugt 0,5 bis 5 cP, jeweils bei 20 °C, aufweisen

Erfindungsgemäß einsetzbare Kohlenwasserstoffe oder -gemische weisen im Allgemeinen einen Flammpunkt von ≥ 20 °C, bevorzugt ≥ 40 °C, auf. Daher betrifft die vorliegende Erfindung auch das erfindungsgemäße Verfahren, wobei der wenigstens eine Kohlenwasserstoff einen Flammpunkt von ≥ 20 °C, besonders bevorzugt ≥ 40 °C, aufweist.

In einer bevorzugten Ausführungsform des erfindungsgemäßen Verfahrens ist der wenigstens eine Kohlenwasserstoff ausgewählt aus der Gruppe bestehend aus Mineralölen, Pflanzenölen, Biodiesel, BtL-Kraftstoffe (Biomass-to-Liquid), Produkte der Kohleverflüssigung, Produkte des GtL-Verfahrens (Gas to Liquid, aus Erdgas) und Mischungen davon.

Mineralöle sind beispielsweise Rohölderivate und/oder durch Destillation aus Braunkohle, Steinkohle, Torf, Holz, Erdöl und gegebenenfalls auch anderen mineralischen Rohstoffen hergestellte Öle. Mineralöle bestehen im Allgemeinen aus Kohlenwasserstoffgemischen aus paraffinischen, d. h. gesättigten kettenförmigen Kohlenwasserstoffen, naphtenischen, d. h. gesättigten ringförmigen Kohlenwasserstoffen, und aromatischen Kohlenwasserstoffen.

Ein besonders bevorzugtes Rohölderivat ist Diesel bzw. Gasöl. Diesel weist im Allgemeinen eine dem Fachmann bekannte Zusammensetzung auf. Im Wesentlichen basiert Diesel auf Mineralöl, d. h. Diesel ist eine Fraktion bei der destillativen Trennung von Mineralöl. Die Hauptbestandteile von Diesel sind vorwiegend Alkane, Cycloalkane und aromatische Kohlenwasserstoffe mit etwa 9 bis 22 Kohlenstoffatomen pro Molekül und einem Siedebereich von 170 °C bis 390 °C.

Weitere Bezeichnungen für geeignete Erdölderivate umfassen: Leichtgasöl (Siedepunkt 235-300 °C, je nach Spec. auch "Diesel" "Dieselkraftstoff" "DK" "Heizöl leicht" "HEL"), Schwergasöl (Siedepunkt 300-375 °C), sowie (in den USA) "No. 2 Fuel"

Pflanzenöle zählen im Allgemeinen zu den Fetten und fetten Ölen, welche aus Ölpflanzen gewonnen werden. Pflanzenöle bestehen beispielsweise aus Triglyceriden. Erfindungsgemäß geeignete Pflanzenöle sind beispielsweise ausgewählt aus der Gruppe bestehend aus Sonnenblumenöl, Rapsöl, Distelöl, Sojaöl, Maiskeimöl, Erdnussöl, Olivenöl, Heringsöl, Baumwollsaatöl, Palmöl und Mischungen davon.

Biodiesel weist im Allgemeinen eine dem Fachmann bekannte Zusammensetzung auf. Im Wesentlichen enthält Biodiesel Methylester von gesättigten C₁₆-C₁₈- und ungesättigten C₁₈-Fettsäuren, insbesondere Rapsölmethylester

Produkte der Kohleverflüssigung können beispielsweise durch das Fischer-Tropsch- bzw. Sasol-Verfahren erhalten werden. Die BtL- und GtL-Verfahren sind dem Fachmann bekannt.

In einer bevorzugten Ausführungsform des erfindungsgemäßen Verfahrens wird in Schritt (A) als Kohlenwasserstoff Diesel, Kerosin und/oder Leichtgasöl eingesetzt. Im Labormaßstab können vorteilhaft Diesel der Marken Solvesso® und/oder Shellsol® eingesetzt werden.

In Schritt (A) des erfindungsgemäßen Verfahrens kann gegebenenfalls zusätzlich wenigstens ein Hydrophobierungsmittel zugegeben werden. Im Rahmen der vorliegenden Erfindung bedeutet "Hydrophobierungsmittel" eine Substanz, die in der Lage ist, die Hydrophobie der Oberfläche des wenigstens einen ersten Stoffes in Anwesenheit der anderen Teilchen, die nicht abgetrennt werden sollen, zu erhöhen. Erfindungsgemäß einsetzbare Hydrophobierungsmittel lagern sich an den mindestens einen ersten Stoff an und bewirken dadurch eine geeignete Hydrophobizität des ersten Stoffes.

Daher betrifft die vorliegende Anmeldung in einer bevorzugten Ausführungsform das erfindungsgemäße Verfahren, wobei in Schritt (A) ein Hydrophobierungsmittel zugegeben wird.

In einer bevorzugten Ausführungsform wird in Schritt (A) des erfindungsgemäßen Verfahrens ein Hydrophobierungsmittel der allgemeinen Formel (I)

A-Z (I)

zugegeben, das an den wenigstens einen ersten Stoff anbindet, worin
- A: ausgewählt aus linearem oder verzweigtem C₃-C₃₀-Alkyl, C₃-C₃₀-Heteroalkyl, gegebenenfalls substituiertes C₆-C₃₀-Aryl, gegebenenfalls substituiertes C₆-C₃₀-Heteroalkyl, C₆-C₃₀-Aralkyl ist und
- Z: eine Gruppe ist, mit der die Verbindung der allgemeinen Formel (I) an den wenigstens einen hydrophoben Stoff anbindet.

In einer besonders bevorzugten Ausführungsform ist A ein lineares oder verzweigtes C₄-C₁₂-Alkyl, ganz besonders bevorzugt ein lineares C₄- bis C₈-Alkyl. Erfindungsgemäß gegebenenfalls vorhandene Heteroatome sind ausgewählt aus N, O, P, S und Halogenen wie F, Cl, Br und I.

In einer weiteren bevorzugten Ausführungsform ist A bevorzugt ein lineares oder verzweigtes, bevorzugt lineares, C₆-C₂₀-Alkyl. Weiterhin ist A bevorzugt ein verzweigtes C₆-C₁₄-Alkyl, wobei der wenigstens eine Substituent, bevorzugt mit 1 bis 6 Kohlenstoffatomen, bevorzugt in 2-Position, vorliegt, beispielsweise 2-Ethylhexyl und/oder 2-Propylheptyl.

In einer weiteren besonders bevorzugten Ausführungsform ist Z ausgewählt aus der Gruppe bestehend aus anionischen Gruppen -(X)ₙ-PO₃²⁻, -(X)ₙ-PO₂S²⁻, -(X)ₙ-POS₂²⁻,-(X)ₙ-PS₃²⁻, -(X)ₙ-PS₂⁻, -(X)ₙ-POS⁻, -(X)ₙ-PO₂⁻, -(X)ₙ-PO₃²⁻ -(X)ₙ-CO₂⁻, -(X)ₙ-CS₂⁻, -(X)ₙ-COS⁻, -(X)ₙ-C(S)NHOH, -(X)ₙ-S⁻ mit X ausgewählt aus der Gruppe bestehend aus O, S, NH, CH₂ und n = 0, 1 oder 2, mit gegebenenfalls Kationen ausgewählt aus der Gruppe bestehend aus Wasserstoff, NR₄⁺ mit R gleich unabhängig voneinander Wasserstoff und/oder C₁-C₈-Alkyl, Alkali- oder Erdalkalimetallen. Die genannten Anionen und die entsprechenden Kationen bilden erfindungsgemäß neutral geladene Verbindungen der allgemeinen Formel (I).

Bedeutet in den genannten Formeln n = 2, so liegen zwei gleiche oder unterschiedliche, bevorzugt gleiche, Gruppen A an eine Gruppe Z gebunden vor.

In einer besonders bevorzugten Ausführungsform werden Verbindungen eingesetzt, ausgewählt aus der Gruppe bestehend aus Xanthaten A-O-CS₂⁻, Dialkyldithiophosphaten (A-O)₂-PS₂⁻, Dialkyldithioposphinaten (A)₂-PS₂⁻ und Mischungen davon, wobei A unabhängig voneinander ein lineares oder verzweigtes, bevorzugt lineares, C₆-C₂₀-Alkyl, beispielsweise n-Octyl, oder ein verzweigtes C₆-C₁₄-Alkyl, wobei die Verzweigung bevorzugt in 2-Position vorliegt, beispielsweise 2-Ethylhexyl und/oder 2-Propylheptyl, ist. Als Gegenionen liegen in diesen Verbindungen bevorzugt Kationen ausgewählt aus der Gruppe bestehend aus Wasserstoff, NR₄⁺ mit R gleich unabhängig voneinander Wasserstoff und/oder C₁-C₈-Alkyl, Alkali- oder Erdalkalimetallen, insbesondere Natrium oder Kalium, vor.

Ganz besonders bevorzugte Verbindungen der allgemeinen Formel (I) sind ausgewählt aus der Gruppe bestehend aus Natrium- oder Kalium-n-octylxanthat, Natrium- oder Kalium-butylxanthat, Natrium- oder Kalium-di-n-octyldithiophosphinat, Natrium- oder Kalium-di-n-octyldithiophosphat, und Mischungen dieser Verbindungen.

Für Edelmetalle, beispielsweise Au, Pd, Rh etc., sind besonders bevorzugte oberflächenaktive Substanzen Mono-, Di- und Trithiole oder 8-Hydroxychinoline, beispielsweise beschrieben in EP 1200408 B1.

Für Metalloxide, beispielsweise FeO(OH), Fe₃O₄, ZnO etc., Carbonate, beispielsweise Azurit [Cu(CO₃)₂(OH)₂], Malachit [Cu₂[(OH)₂CO₃]], sind besonders bevorzugte Hydrophobierungsmittel Octylphosphonsäure (OPS), (EtO)₃Si-A, (MeO)₃Si-A, mit den oben genannten Bedeutungen für A. In einer bevorzugten Ausführungsform des erfindungsgemäßen Verfahrens werden als Hydrophobierungsmittel keine Hydroxamate zur Modifizierung von Metalloxiden eingesetzt.

Für Metallsulfide, beispielsweise Cu₂S, MoS₂, etc., sind besonders bevorzugte Hydrophobierungsmittel Mono-, Di- und Trithiole oder Xanthogenate.

In einer weiteren bevorzugten Ausführungsform des erfindungsgemäßen Verfahrens bedeutet Z -(X)ₙ-CS₂⁻, -(X)ₙ-PO₂⁻ oder -(X)ₙ-S⁻ mit X gleich O und n gleich 0 oder 1 und einem Kation ausgewählt aus Wasserstoff, Natrium oder Kalium. Ganz besonders bevorzugte Hydrophobierungsmittel sind 1-Octanthiol, Kalium-n-octylxanthat, Kalium-butylxanthat, Octylphosphonsäure oder Di(n-Octyl)thionocarbamat (eine Verbindung der folgenden Formel (II))

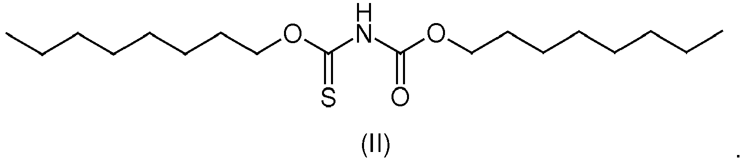

Die Zugabe von wenigstens einem oben genannten Hydrophobierungsmittel in Schritt (A) des erfindungsgemäßen Verfahrens erfolgt bevorzugt dann, wenn die Hydrophobie des wenigstens einen ersten Stoffes nicht genügend hoch ist, besonders bevorzugt, wenn der wenigstens eine erste Stoff ausgewählt ist aus FeCuS₂ oder CuS₂.

Das Inkontaktbringen der Mischung, des wenigstens einen Kohlenwasserstoffes und gegebenenfalls des wenigstens einen Hydrophobierungsmittels in Schritt (A) des erfindungsgemäßen Verfahrens kann durch alle dem Fachmann bekannte Verfahren geschehen. Schritt (A) kann in Substanz oder in Dispersion, bevorzugt in Suspension, besonders bevorzugt in wässriger Suspension, durchgeführt werden.

In einer Ausführungsform des erfindungsgemäßen Verfahrens wird Schritt (A) in Substanz, d. h. in Abwesenheit eines Dispersionsmittels, durchgeführt.

Beispielsweise werden die zu behandelnde Mischung und der wenigstens eine Kohlenwasserstoff oder ein Kohlenwasserstoffgemisch und gegebenenfalls wenigstens ein Hydrophobierungsmittel ohne weiteres Dispersionsmittel in den entsprechenden Mengen zusammen gegeben und vermischt. Geeignete Mischungsapparaturen sind dem Fachmann bekannt, beispielsweise Mühlen wie eine Kugelmühle.

In einer weiteren bevorzugten Ausführungsform wird Schritt (A) in einer Dispersion, bevorzugt in Suspension, durchgeführt. Als Dispersionsmittel sind alle Dispersionsmittel geeignet, in denen die Mischung aus Schritt (A) nicht vollständig löslich ist. Geeignete Dispersionsmittel zur Herstellung der Aufschlämmung oder Dispersion gemäß Schritt (A) des erfindungsgemäßen Verfahrens sind ausgewählt aus der Gruppe bestehend aus Wasser, wasserlöslichen organischen Verbindungen, beispielsweise Alkoholen mit 1 bis 4 Kohlenstoffatomen, und Mischungen davon.

In einer besonders bevorzugten Ausführungsform ist das Dispersionsmittel in Schritt (A) Wasser.

Der Feststoffgehalt der in Schritt (A) erhaltenen Dispersion beträgt im Allgemeinen 40 bis 80 Gew.-%, bevorzugt 50 bis 70 Gew.-%, jeweils bezogen auf die gesamte Mischung.

Schritt (A) des erfindungsgemäßen Verfahrens wird im Allgemeinen bei einer Temperatur von 1 bis 80 °C, bevorzugt bei 20 bis 40 °C, besonders bevorzugt bei Umgebungstemperatur durchgeführt.

### Schritt (B):

Der optionale Schritt (B) des erfindungsgemäßen Verfahrens umfasst die Zugabe wenigstens eines Dispersionsmittels zu der in Schritt (A) erhaltenen Mischung, um eine Dispersion zu erhalten.

Die in Schritt (A) erhaltene Mischung enthält in einer Ausführungsform, falls Schritt (A) in Substanz durchgeführt wird, wenigstens einen ersten, hydrophoben oder hydrophobierten Stoff, wenigstens einen zweiten, hydrophoben oder hydrophobierten Stoff und wenigstens einen dritten, hydrophilen Stoff, sowie wenigstens einen Kohlenswasserstoff und gegebenenfalls wenigstens ein Hydrophobierungsmittel. Wird Schritt (A) in Substanz durchgeführt, wird Schritt (B) des erfindungsgemäßen Verfahrens durchgeführt, d.h. wenigstens ein geeignetes Dispersionsmittel wird zu der in Schritt (A) erhaltenen Mischung zugegeben, um eine Dispersion zu erhalten.

In der Ausführungsform, in der Schritt (A) des erfindungsgemäßen Verfahrens in Dispersion durchgeführt wird, muss Schritt (B) nicht unbedingt durchgeführt werden. Es ist jedoch auch bei dieser Ausführungsform bevorzugt, Schritt (B) durchzuführen, d.h. weiteres Dispersionsmittel zuzugeben, um in Schritt (B) eine Dispersion zu erhalten, die einen niedrigeren Feststoffgehalt als die Dispersion in Schritt (A) aufweist.

Als geeignete Dispersionsmittel sind alle Dispersionsmittel geeignet, die bereits bezüglich Schritt (A) genannt worden sind. In einer besonders bevorzugten Ausführungsform ist das Dispersionsmittel in Schritt (B) Wasser.

In Schritt (B) wird somit entweder die in Substanz vorliegende Mischung aus Schritt (A) in eine Dispersion überführt, oder die bereits in Dispersion vorliegende Mischung aus Schritt (A) wird durch Zugabe von Dispersionsmittel in eine Dispersion mit niedrigerem Feststoffgehalt überführt.

Im Allgemeinen kann die Menge an Dispersionsmittel, zugegeben in Schritt (A) und/oder Schritt (B) erfindungsgemäß so gewählt werden, dass eine Dispersion erhalten wird, welche gut rührbar und/oder förderbar ist. In einer bevorzugten Ausführungsform beträgt der Feststoffgehalt der in Schritt (B) des erfindungsgemäßen Verfahrens erhaltenen Dispersion 0,5 bis 30 Gew.-%, bevorzugt 1,0 bis 15 Gew.-%, besonders bevorzugt 2,0 bis 10 Gew.-%, jeweils bezogen auf die gesamte Dispersion.

In einer bevorzugten Ausführungsform des erfindungsgemäßen Verfahrens wird Schritt (B) durchgeführt, da in Schritt (A) bevorzugt eine wässrige Dispersion mit hohem Feststoffgehalt, wie oben angegeben, hergestellt wird, die in Schritt (B) bevorzugt in eine Dispersion überführt wird, die einen niedrigeren, oben angegebenen, Feststoffgehalt aufweist, um in Schritt (C) des erfindungsgemäßen Verfahrens eingesetzt zu werden.

Die Zugabe von Dispersionsmittel in Schritt (B) des erfindungsgemäßen Verfahrens kann erfindungsgemäß nach allen dem Fachmann bekannten Verfahren erfolgen.

### Schritt (C):

Schritt (C) des erfindungsgemäßen Verfahrens umfasst das Behandeln der Dispersion aus Schritt (A) oder (B) mit wenigstens einem hydrophoben Magnetpartikel, so dass sich der wenigstens eine erste Stoff und der wenigstens eine Magnetpartikel anlagern.

In Schritt (C) des erfindungsgemäßen Verfahrens können alle dem Fachmann bekannten magnetischen Substanzen und Stoffe eingesetzt werden. In einer bevorzugten Ausführungsform ist der wenigstens eine Magnetpartikel ausgewählt aus der Gruppe bestehend aus magnetischen Metallen, beispielsweise Eisen, Cobalt, Nickel und Mischungen davon, ferromagnetischen Legierungen von magnetischen Metallen, beispielsweise NdFeB, SmCo und Mischungen davon, magnetischen Eisenoxiden, beispielsweise Magnetit, Maghemit, kubischen Ferriten der allgemeinen Formel (III)

M²⁺ₓFe²⁺₁₋ₓFe³⁺₂O₄ (III)

mit
- M: ausgewählt aus Co, Ni, Mn, Zn und Mischungen davon und
- x: ≤ 1,
hexagonalen Ferriten, beispielsweise Barium- oder Strontiumferrit MFe₆O₁₉ mit M = Ca, Sr, Ba, und Mischungen davon. Die Magnetpartikel können zusätzlich eine äußere Schicht, beispielsweise aus SiO₂, aufweisen.

In einer besonders bevorzugten Ausführungsform der vorliegenden Anmeldung ist der wenigstens eine magnetische Partikel Magnetit oder Kobaltferrit Co²⁺ₓFe²⁺₁₋ₓFe³⁺₂O₄ mit x ≤ 1.

In einer weiteren bevorzugten Ausführungsform ist der wenigstens eine magnetische Partikel an der Oberfläche mit wenigstens einer hydrophoben Verbindung hydrophobiert. Bevorzugt ist die hydrophobe Verbindung ausgewählt aus Verbindungen der allgemeinen Formel (IV)

B-Y (IV),

worin
- B: ausgewählt ist aus linearem oder verzweigtem C₃-C₃₀-Alkyl, C₃-C₃₀-Heteroalkyl, gegebenenfalls substituiertes C₆-C₃₀-Aryl, gegebenenfalls substituiertes C₆-C₃₀-Heteroalkyl, C₆-C₃₀-Aralkyl und
- Y: eine Gruppe ist, mit der die Verbindung der allgemeinen Formel (III) an den wenigstens einen magnetischen Partikel anbindet.

In einer besonders bevorzugten Ausführungsform ist B ein lineares oder verzweigtes C₆-C₁₈-Alkyl, bevorzugt lineares C₈-C₁₂-Alkyl, ganz besonders bevorzugt ein lineares C₁₂-Alkyl. Erfindungsgemäß gegebenenfalls vorhandene Heteroatome sind ausgewählt aus N, O, P, S und Halogenen wie F, Cl, Br und I.

In einer weiteren besonders bevorzugten Ausführungsform ist Y ausgewählt aus der Gruppe bestehend aus -(X)ₙ-SiHaI₃, -(X)ₙ-SiHHaI₂, -(X)ₙ-SiH₂HaI mit HaI gleich F, Cl, Br, I, und anionischen Gruppen wie -(X)ₙ-SiO₃³⁻, -(X)ₙ-CO₂⁻, -(X)ₙ-PO₃²⁻, -(X)ₙ-PO₂S²⁻,-(X)ₙ-POS₂²⁻, -(X)ₙ-PS₃²⁻, -(X)ₙ-PS₂⁻, -(X)ₙ-POS⁻, -(X)ₙ-PO₂⁻, -(X)ₙ-CO₂⁻, -(X)ₙ-CS₂⁻, -(X)ₙ-COS⁻, -(X)ₙ-C(S)NHOH, -(X)ₙ-S⁻ mit X = O, S, NH, CH₂ und n = 0, 1 oder 2, und gegebenenfalls Kationen ausgewählt aus der Gruppe bestehen aus Wasserstoff, NR₄⁺ mit R gleich unabhängig voneinander Wasserstoff und/oder C₁-C₈-Alkyl, Alkali-, Erdalkalimetallen oder Zink, des Weiteren -(X)ₙ-Si(OZ)₃ mit n = 0, 1 oder 2 und Z = Ladung, Wasserstoff oder kurzkettiger Alkylrest.

Ganz besonders bevorzugte hydrophobierende Substanzen der allgemeinen Formel (IV) sind Dodecyltrichlorsilan, Octylphosphonsäure, Laurinsäure, Ölsäure, Stearinsäure, Alkylester der Phosphorsäure mit Alkyl unabhängig voneinander lineares oder verzweigtes, bevorzugt lineares, C₆-C₂₀-Alkyl, beispielsweise n-Octyl, oder ein verzweigtes C₆-C₁₄-Alkyl, wobei die Verzweigung bevorzugt in 2-Position vorliegt, beispielsweise 2-Ethylhexyl und/oder 2-Propylheptyl, oder Mischungen davon.

Das Behandeln der Lösung oder Dispersion mit wenigstens einem hydrophoben Magnetpartikel in Schritt (C) des erfindungsgemäßen Verfahrens kann nach allen dem Fachmann bekannten Verfahren erfolgen.

In einer bevorzugten Ausführungsform wird der wenigstens eine magnetische Partikel in einem geeigneten Dispersionsmittel dispergiert.

Als geeignete Dispersionsmittel sind alle Dispersionsmittel geeignet, in denen der wenigstens eine Magnetpartikel nicht vollständig löslich ist. Geeignete Dispersionsmittel zur Dispergierung gemäß Schritt (C) des erfindungsgemäßen Verfahrens sind ausgewählt aus der Gruppe bestehend aus Wasser, wasserlöslichen organischen Verbindungen, beispielsweise Alkoholen mit 1 bis 4 Kohlenstoffatomen, beispielsweise Methanol, Ethanol, n-Propanol, iso-Propanol, und Mischungen davon, besonders Wasser und/oder iso-Propanol.

Im Allgemeinen kann die Menge an Dispersionsmittel zum Vordispergieren der Magnetpartikel erfindungsgemäß so gewählt werden, dass eine Aufschlämmung oder Dispersion erhalten wird, welche gut rührbar und/oder förderbar ist. In einer bevorzugten Ausführungsform beträgt die Menge an zu behandelnder Mischung bezogen auf die gesamte Aufschlämmung oder Dispersion bis 60 Gew.-%.

Die Dispersion der Magnetpartikel kann erfindungsgemäß nach allen dem Fachmann bekannten Verfahren hergestellt werden. In einer bevorzugten Ausführungsform werden die zu dispergierenden Magnetpartikel und die entsprechende Menge Dispersionsmittel bzw. Dispersionsmittelgemisch in einem geeigneten Reaktor, beispielsweise einem Glasreaktor, zusammengegeben und mit dem Fachmann bekannten Vorrichtungen gerührt, beispielsweise in einer Glaswanne mit einem mechanisch betriebenen Flügelrührer, beispielsweise bei einer Temperatur von 1 bis 80 °C, bevorzugt bei Umgebungstemperatur.

In Schritt (C) des erfindungsgemäßen Verfahrens wird der wenigstens eine hydrophoben Magnetpartikel im Allgemeinen in einer Menge eingesetzt, die ausreicht, um den wenigstens einen ersten Stoff möglichst vollständig aus der zu behandelnden Mischung abzutrennen. Bevorzugt wird der wenigstens eine Magnetpartikel in einem mindestens 10fachen, besonders bevorzugt mindestens 50fachen, ganz besonders bevorzugt mindestens 140fachen gewichtsmäßigen Überschuss, bezogen auf die Menge des wenigstens einen ersten Stoff in der zu behandelnden Mischung, in Schritt (C) des erfindungsgemäßen Verfahrens, eingesetzt.

Das Behandeln der Dispersion aus Schritt (B) mit wenigstens einem hydrophoben Magnetpartikel geschieht im Allgemeinen so, dass beide Komponenten durch dem Fachmann bekannte Methoden zusammengegeben werden. In einer bevorzugten Ausführungsform wird eine Dispersion des wenigstens einen magnetischen Partikels zu der zuvor mit wenigstens einem Kohlenwasserstoff behandelten Mischung gegeben. In einer weiteren Ausführungsform kann der magnetische Partikel in fester Form zu einer Dispersion der zu behandelnden Mischung gegeben werden. In einer weiteren bevorzugten Ausführungsform liegen beide Komponenten in dispergierter Form vor.

Schritt (C) wird im Allgemeinen bei einer Temperatur von 1 bis 80 °C, bevorzugt 10 bis 30 °C, beispielsweise Umgebungstemperatur, durchgeführt.

In Schritt (C) lagert sich der wenigstens eine magnetische Partikel an den wenigstens einen ersten Stoff der zu behandelnden Mischung an. Die zwischen den beiden Komponenten bestehende Bindung basiert auf hydrophoben Wechselwirkungen. Zwischen dem wenigstens einen magnetischen Partikel und dem wenigstens einen zweiten Stoff findet in einer bevorzugten Ausführungsform keine oder nur eine geringe hydrophobe Wechselwirkung statt. Zwischen dem wenigstens einen magnetischen Partikel und dem wenigstens einen dritten Stoff, d. h. dem hydrophilen Anteil der Mischung, findet im Allgemeinen keine bindende Wechselwirkung statt, so dass zwischen diesen Komponenten keine Anlagerung stattfindet. Nach Schritt (C) liegen somit in der Mischung Anlagerungsprodukte des wenigstens einen ersten Stoffes und des wenigstens einen magnetischen Partikels neben dem wenigstens einen zweiten und dem wenigstens einen dritten Stoff vor. Durch das erfindungsgemäße Verfahren ist es somit möglich, aus einem Gemisch enthaltend wenigstens drei Stoffe, wobei wenigstens zwei der drei Stoffe einen sehr ähnlichen chemischen Charakter bezüglich Hydrophobie bzw. Affinität zum Hydrophobierungsmittel, vorhandenem Anion etc. aufweisen, selektiv einen Stoff abzutrennen.

### Schritt (D):

Schritt (D) des erfindungsgemäßen Verfahrens umfasst das Abtrennen des Anlagerungsproduktes aus Schritt (C) von der Mischung durch Anlegen eines magnetischen Feldes.

Schritt (D) kann in einer bevorzugten Ausführungsform durchgeführt werden, indem ein Dauermagnet in den Reaktor eingebracht wird, in dem sich die Mischung aus Schritt (C) befindet. In einer bevorzugten Ausführungsform befindet sich zwischen Dauermagnet und zu behandelnder Mischung eine Trennwand aus nicht magnetischem Material, beispielsweise die Glaswand des Reaktors. In einer weiteren bevorzugten Ausführungsform des erfindungsgemäßen Verfahrens wird in Schritt (D) ein elektrisch schaltbarer Magnet eingesetzt, der nur dann magnetisch ist, wenn ein elektrischer Strom fließt. Geeignete Vorrichtungen sind dem Fachmann bekannt.

Schritt (D) des erfindungsgemäßen Verfahrens kann bei jeder geeigneten Temperatur durchgeführt werden, beispielsweise 10 bis 60 °C.

Während Schritt (D) wird die Mischung bevorzugt permanent mit einem geeigneten Rührer gerührt.

In Schritt (D) kann das Anlagerungsprodukt aus Schritt (C) gegebenenfalls durch alle dem Fachmann bekannten Verfahren abgetrennt werden, beispielsweise durch Ablassen der Flüssigkeit mit dem Anteil der Dispersion, der nicht durch den Magneten festgehalten wird, aus dem Bodenventil aus dem für Schritt (D) benutzten Reaktor oder Abpumpen der nicht durch den mindestens einen Magneten festgehaltenen Anteile der Dispersion durch einen Schlauch.

### Schritt (E):

Der optionale Schritt (E) des erfindungsgemäßen Verfahrens umfasst das Spalten des abgetrennten Anlagerungsproduktes aus Schritt (D), um den wenigstens einen ersten Stoff und den wenigstens einen Magnetpartikel separat zu erhalten. In einer bevorzugten Ausführungsform des erfindungsgemäßen Verfahrens erfolgt das Spalten in Schritt (E) nicht zerstörerisch, d. h. dass die in der Dispersion vorliegenden Einzelkomponenten chemisch nicht verändert werden.

Das Spalten kann nach allen dem Fachmann bekannten Verfahren erfolgen, die dazu geeignet sind, das Anlagerungsprodukt derart zu spalten, dass der wenigstens eine magnetische Partikel in wieder einsetzbarer Form zurück gewonnen werden kann. In einer bevorzugten Ausführungsform wird der abgespaltene Magnetpartikel wieder in Schritt (C) eingesetzt.

In einer bevorzugten Ausführungsform erfolgt das Spalten in Schritt (C) des erfindungsgemäßen Verfahrens durch Behandlung des Anlagerungsproduktes mit einer Substanz ausgewählt aus der Gruppe bestehend aus organischen Lösungsmitteln, basischen Verbindungen, sauren Verbindungen, Oxidationsmitteln, Reduktionsmitteln, oberflächenaktiven Verbindungen und Mischungen davon.

Beispiele für geeignete organische Lösungsmittel sind Methanol, Ethanol, Propanol, beispielsweise n-Propanol oder iso-Propanol, aromatische Lösungsmittel, beispielsweise Benzol, Toluol, Xylole, Ether, beispielsweise Diethylether, Methyl-t-butyl-ether, Ketone, beispielsweise Aceton, Diesel und Mischungen davon. Beispiele für erfindungsgemäß einsetzbare basische Verbindungen sind wässrige Lösungen basischer Verbindungen, beispielsweise wässrige Lösungen von Alkali- und/oder Erdalkalihydroxiden, beispielsweise KOH, NaOH, wässrige Ammoniaklösungen, wässrige Lösungen organischer Amine der allgemeinen Formel R²₃N, wobei R² unabhängig voneinander ausgewählt ist aus der Gruppe bestehend aus C₁-C₈-Alkyl, gegebenenfalls substituiert mit weiteren funktionellen Gruppen. In einer bevorzugten Ausführungsform erfolgt Schritt (D) durch Zugabe von wässriger NaOH-Lösung bis zu einem pH-Wert von 13. Die sauren Verbindungen können mineralische Säuren sein, beispielsweise HCl, H₂SO₄, HNO₃ oder Mischungen davon, organische Säuren, beispielsweise Carbonsäuren. Als Oxidationsmittel kann beispielsweise Na₂S₂O₄ oder H₂O₂ eingesetzt werden, beispielsweise als 30 gew.-%ige wässrige Lösung von H₂O₂ (Perhydrol).

Beispiele für erfindungsgemäß einsetzbare oberflächenaktive Verbindungen sind nichtionische, anionische, kationische und/oder zwitterionische Tenside.

In einer bevorzugten Ausführungsform wird das Anlagerungsprodukt aus wenigstens einem ersten Stoff und magnetischem Teilchen mit einem organischen Lösungsmittel, besonders bevorzugt mit Aceton oder Diesel, gespalten. Dieser Vorgang kann auch mechanisch unterstützt werden. In einer bevorzugten Ausführungsform wird Ultraschall zur Unterstützung des Spaltungsvorgangs eingesetzt.

Im Allgemeinen wird das organische Lösungsmittel in einer Menge verwendet, die ausreicht, um möglichst das gesamte Anlagerungsprodukt zu spalten. In einer bevorzugten Ausführungsform werden 2 bis 100 ml des organischen Lösungsmittels pro Gramm zu spaltendem Anlagerungsprodukt aus wenigstens einem ersten Stoff und magnetischem Partikel verwendet.

Erfindungsgemäß liegt nach der Spaltung der wenigstens eine erste Stoff und der wenigstens eine Magnetpartikel als Dispersion in dem genannten Spaltungsreagenz, bevorzugt einem organischen Lösungsmittel, vor.

Der wenigstens eine Magnetpartikel wird aus der Dispersion enthaltend diesen wenigstens einen Magnetpartikel und den wenigstens einen ersten Stoff durch einen permanenten oder schaltbaren Magneten von der Lösung abgetrennt. Details dieses Abtrennens sind analog zu Schritt (D) des erfindungsgemäßen Verfahrens.

Bevorzugt wird der abzutrennende erste Stoff, bevorzugt die abzutrennende Metallverbindung, von dem organischen Lösungsmittel durch Abdestillieren des organischen Lösungsmittels getrennt. Der so erhältliche erste Stoff kann durch weitere, dem Fachmann bekannte Verfahren gereinigt werden. Das Lösungsmittel kann, gegebenenfalls nach Aufreinigung, wieder in das erfindungsgemäße Verfahren zurückgeführt werden.

### Beispiele

### Beispiel 1:

Es werden 100 g Erz (mit einem Gehalt an 0,7 Gew.-% Kupfer und 0,02 Gew.-% Molybdän, beides Sulfide) auf eine Partikelgröße von < 125 µm gemahlen, und in 60 g Wasser in einer Schwingkugelmühle für 5 Minuten mit 160 mL ZrO₂-Kugeln (Durchmesser 1,7 bis 2,7 mm) nach Zugabe von 0,04 Gew.-% Diesel der Marke Shellsol® D40 konditioniert.

Parallel dazu werden 3 g hydrophobisiertes Magnetpigment 345 (hydrophobisiert mit 0,5 Gew.-% Octylphosphonsäure) in 3 g iso-Propanol aufgeschlämmt.

Anschließend werden beide Ansätze für weitere 5 Minuten in einer Schwingkugelmühle mit 160 mL ZrO₂-Kugeln (Durchmesser 1,7 bis 2,7 mm) konditioniert.

Das entstandene Gemisch wird durch Einrühren in 1 L Wasser verdünnt. Anschließend werden die magnetischen Bestandteile von den unmagnetischen Bestandteilen mit einem Magneten getrennt, indem ein Co/Sm-Magnet an die Gefäß-Außenwand gehalten wird.

Die magnetischen Rückstände werden getrocknet und auf Kupfer und Molybdän analysiert; der magnetische Rückstand enthält 8,7% Kupfer und 85 % Molybdän, jeweils bezogen auf die Mengen, die in der Ausgangsmischung vorgelegen haben.

### Beispiel 2 (FeCuS₂/ZnS):

Gemäß Beispiel 1 wird eine Mischung aus 1 g FeCuS₂, 1 g ZnS und 54 g SiO₂ mit 0,04 Gew.-% Diesel der Marke Shellsol® D40 und 0,06 Gew.-% Kalium-octylxanthat behandelt, wobei der pH-Wert durch Zugabe von stark verdünnter NaOH-Lösung auf ca. 9,0 eingestellt wird, und dann magnetisch abgetrennt. In dem magnetischen Rückstand werden 2 % Zink, aber 99 % Kupfer, jeweils bezogen auf die Mengen, die in der Ausgangsmischung vorgelegen haben, gefunden.

### Beispiel 3 (Cu₂S/FeS₂):

Gemäß Beispiel 1 wird eine Mischung aus 1 g FeS₂, 1 g Cu₂S und 54 g SiO₂ mit 0,04 Gew.-% Diesel der Marke Shellsol® D40 und 0,06 Gew.-% Kalium-octylxanthat behandelt und dann magnetisch getrennt. In dem magnetischen Rückstand werden 44 % FeS₂, aber 96 % Kupfer, jeweils bezogen auf die Mengen, die in der Ausgangsmischung vorgelegen haben, gefunden.

## Patentansprüche

1. Verfahren zum Abtrennen wenigstens eines ersten, hydrophoben oder hydrophobierten Stoffes aus einer Mischung umfassend diesen wenigstens einen ersten, hydrophoben oder hydrophobierten Stoff, wenigstens einen zweiten, hydrophoben oder hydrophobierten Stoff und wenigstens einen dritten, hydrophilen Stoff, wobei der wenigstens eine erste, hydrophobe oder hydrophobierte Stoff eine größere Hydrophobie aufweist als der wenigstens eine zweite, hydrophobe oder hydrophobierte Stoff, umfassend wenigstens die folgenden Schritte:
(A) Inkontaktbringen der Mischung enthaltend wenigstens einen ersten, hydrophoben oder hydrophobierten Stoff aus einer Mischung umfassend diesen wenigstens einen ersten, hydrophoben oder hydrophobierten Stoff, wenigstens einen zweiten, hydrophoben oder hydrophobierten Stoff und wenigstens einen dritten, hydrophilen Stoff mit wenigstens einem Kohlenwasserstoff in einer Menge von 0,01 bis 0,4 Gew.-%, bezogen auf die Summe aus Mischung und wenigstens einem Kohlenwasserstoff, gegebenenfalls in Gegenwart wenigstens eines Dispersionsmittels,
wobei der wenigstens eine Kohlenwasserstoff eine organische chemische Verbindung ist, die aus Kohlenstoff, Wasserstoff und gegebenenfalls Sauerstoff aufgebaut ist,
(B) gegebenenfalls Zugabe wenigstens eines Dispersionsmittels zu der in Schritt (A) erhaltenen Mischung, um eine Dispersion zu erhalten,
(C) Behandeln der Dispersion aus Schritt (A) oder (B) mit wenigstens einem hydrophoben Magnetpartikel, so dass sich der wenigstens eine erste, hydrophobe oder hydrophobierte Stoff und der wenigstens eine Magnetpartikel anlagern,
(D) Abtrennen des Anlagerungsproduktes aus Schritt (C) von der Mischung durch Anlegen eines magnetischen Feldes,
(E) gegebenenfalls Spalten des abgetrennten Anlagerungsproduktes aus Schritt (D), um den wenigstens einen ersten, hydrophoben oder hydrophobierten Stoff und den wenigstens einen Magnetpartikel separat zu erhalten.

2. Verfahren nach Anspruch 1, **dadurch gekennzeichnet, dass** der wenigstens eine erste, hydrophobe oder hydrophobierte Stoff und der wenigstens eine zweite, hydrophobe oder hydrophobierte Stoff hydrophobe Metallverbindungen oder Kohle und der wenigstens eine dritte, hydrophile Stoff eine hydrophile Metallverbindung sind.

3. Verfahren nach Anspruch 1 oder 2, **dadurch gekennzeichnet, dass** der wenigstens eine Kohlenwasserstoff ausgewählt ist aus der Gruppe bestehend aus Rohölderivaten, Mineralölen, Mineralwachsen, Pflanzenölen, Biodiesel, Diesel und Mischungen davon.

4. Verfahren nach einem der Ansprüche 1 bis 3, **dadurch gekennzeichnet, dass** der wenigstens eine Kohlenwasserstoff einen Flammpunkt von wenigstens 20 °C aufweist.

5. Verfahren nach einem der Ansprüche 1 bis 4, **dadurch gekennzeichnet, dass** der wenigstens eine erste, hydrophobe oder hydrophobierte Stoff ein sulfidisches Molybänerz ist und der wenigstens eine zweite, hydrophobe oder hydrophobierte Stoff ein sulfidisches Kupfererz ist.

6. Verfahren nach einem der Ansprüche 1 bis 5, **dadurch gekennzeichnet, dass** der wenigstens eine dritte, hydrophile Stoff ausgewählt ist aus der Gruppe bestehend aus oxidischen und hydroxidischen Metallverbindungen.

7. Verfahren nach einem der Ansprüche 1 bis 6, **dadurch gekennzeichnet, dass** der wenigstens eine Magnetpartikel ausgewählt ist aus der Gruppe bestehend aus magnetischen Metallen und Mischungen davon, ferromagnetischen Legierungen von magnetischen Metallen und Mischungen davon, magnetischen Eisenoxiden, kubischen Ferriten der allgemeinen Formel (III)
M²⁺ₓFe²⁺₁₋ₓFe³⁺₂O₄ (III)
mit
M ausgewählt aus Co, Ni, Mn, Zn und Mischungen davon und
x ≤ 1,
hexagonalen Ferriten und Mischungen davon.

8. Verfahren nach einem der Ansprüche 1 bis 7, **dadurch gekennzeichnet, dass** das Dispersionsmittel in Schritt (A) Wasser ist.

9. Verfahren nach einem der Ansprüche 1 bis 8, **dadurch gekennzeichnet, dass** die Mischung enthaltend wenigstens einen ersten, hydrophoben oder hydrophobierten Stoff, wenigstens einen zweiten, hydrophoben oder hydrophobierten Stoff und wenigstens einen dritten, hydrophilen Stoff vor oder während Schritt (A) zu Partikeln mit einer Größe von 100 nm bis 100 µm vermahlen wird.

10. Verfahren nach einem der Ansprüche 1 bis 9, **dadurch gekennzeichnet, dass** in Schritt (A) ein Hydrophobierungsmittel zugegeben wird.

## Claims

1. A process for separating at least one first, hydrophobic or hydrophobicized material from a mixture comprising this at least one first, hydrophobic or hydrophobicized material, at least one second, hydrophobic or hydrophobicized material and at least one third, hydrophilic material, wherein the at least one first, hydrophobic or hydrophobicized material exhibits greater hydrophobicity than the at least one second, hydrophobic or hydrophobicized material, which process comprises at least the following steps:
(A) contacting of the mixture comprising at least one first, hydrophobic or hydrophobicized material from a mixture comprising this at least one first, hydrophobic or hydrophobicized material, at least one second, hydrophobic or hydrophobicized material and at least one third, hydrophilic material with at least one hydrocarbon in an amount of from 0.01 to 0.4% by weight, based on the sum of mixture and at least one hydrocarbon, in the presence or absence of at least one dispersion medium,
wherein the at least one hydrocarbon is an organic chemical compound composed of carbon, hydrogen and optionally oxygen,
(B) optionally, addition of at least one dispersion medium to the mixture obtained in step (A) in order to obtain a dispersion,
(C) treatment of the dispersion from step (A) or (B) with at least one hydrophobic magnetic particle, so that the at least one first, hydrophobic or hydrophobicized material and the at least one magnetic particle agglomerate,
(D) separation of the adduct from step (C) from the mixture by application of a magnetic field,
(E) optionally, dissociation of the adduct which has been separated off in step (D) in order to obtain the at least one first, hydrophobic or hydrophobicized material and the at least one magnetic particle separately.

2. The process according to claim 1, wherein the at least one first, hydrophobic or hydrophobicized material and the at least one second, hydrophobic or hydrophobicized material are hydrophobic metal compounds or coal and the at least one third, hydrophilic material is a hydrophilic metal compound.

3. The process according to claim 1 or 2, wherein the at least one hydrocarbon is selected from the group consisting of crude oil derivatives, mineral oils, mineral waxes, vegetable oils, biodiesel, diesel and mixtures thereof.

4. The process according to any of claims 1 to 3, wherein the at least one hydrocarbon has a flash point of at least 20°C.

5. The process according to any of claims 1 to 4, wherein the at least one first, hydrophobic or hydrophobicized material is a sulfidic molybdenum ore and the at least one second, hydrophobic or hydrophobicized material is a sulfidic copper ore.

6. The process according to any of claims 1 to 5, wherein the at least one third, hydrophilic material is selected from the group consisting of oxidic and hydroxidic metal compounds.

7. The process according to any of claims 1 to 6, wherein the at least one magnetic particle is selected from the group consisting of magnetic metals and mixtures thereof, ferromagnetic alloys of magnetic metals and mixtures thereof, magnetic iron oxides, cubic ferrites of the general formula (III)
M²⁺ₓ^{Fe2+}₁₋ₓFe³⁺₂O₄ (III)
where
M is selected from among Co, Ni, Mn, Zn and mixtures thereof and
x is ≤ 1,
hexagonal ferrites and mixtures thereof.

8. The process according to any of claims 1 to 7, wherein the dispersion medium in step (A) is water.

9. The process according to any of claims 1 to 8, wherein the mixture comprising at least one first, hydrophobic or hydrophobicized material, at least one second, hydrophobic or hydrophobicized material and at least one third, hydrophilic material is milled to particles having a size of from 100 nm to 100 µm before or during step (A).

10. The process according to any of claims 1 to 9, wherein a hydrophobicizing agent is added in step (A).

## Revendications

1. Procédé de séparation d'au moins une première substance hydrophobe ou hydrophobée d'un mélange comprenant cette au moins une première substance hydrophobe ou hydrophobée, au moins une deuxième substance hydrophobe ou hydrophobée et au moins une troisième substance hydrophile, ladite au moins une première substance hydrophobe ou hydrophobée présentant une hydrophobie plus grande que ladite au moins une deuxième substance hydrophobe ou hydrophobée, comprenant au moins les étapes suivantes :
(A) la mise en contact du mélange contenant au moins une première substance hydrophobe ou hydrophobée d'un mélange comprenant cette au moins une première substance hydrophobe ou hydrophobée, au moins une deuxième substance hydrophobe ou hydrophobée et au moins une troisième substance hydrophile, avec au moins un hydrocarbure en une quantité de 0,01 à 0,4 % en poids, par rapport à la somme du mélange et dudit au moins un hydrocarbure, éventuellement en présence d'au moins un dispersant,
ledit au moins un hydrocarbure étant un composé chimique organique qui est formé par du carbone, de l'hydrogène et éventuellement de l'oxygène,
(B) éventuellement l'ajout d'au moins un dispersant au mélange obtenu à l'étape (A), afin d'obtenir une dispersion,
(C) le traitement de la dispersion de l'étape (A) ou (B) avec au moins une particule magnétique hydrophobe, de telle sorte que ladite au moins une première substance hydrophobe ou hydrophobée et ladite au moins une particule magnétique s'associent,
(D) la séparation du produit d'association de l'étape (C) du mélange par application d'un champ magnétique,
(E) éventuellement le clivage du produit d'association séparé de l'étape (D), afin d'obtenir séparément ladite au moins une première substance hydrophobe ou hydrophobée et ladite au moins une particule magnétique.

2. Procédé selon la revendication 1, **caractérisé en ce que** ladite au moins une première substance hydrophobe ou hydrophobée et ladite au moins une deuxième substance hydrophobe ou hydrophobée sont des composés métalliques hydrophobes ou du charbon, et ladite au moins une troisième substance hydrophile est un composé métallique hydrophile.

3. Procédé selon la revendication 1 ou 2, **caractérisé en ce que** ledit au moins un hydrocarbure est choisi dans le groupe constitué par les dérivés de pétrole, les huiles minérales, les cires minérales, les huiles végétales, le biodiesel, le diesel et leurs mélanges.

4. Procédé selon l'une quelconque des revendications 1 à 3, **caractérisé en ce que** ledit au moins un hydrocarbure présente un point de flamme d'au moins 20 °C.

5. Procédé selon l'une quelconque des revendications 1 à 4, **caractérisé en ce que** ladite au moins une première substance hydrophobe ou hydrophobée est un minerai de molybdène sulfuré, et ladite au moins une deuxième substance hydrophobe ou hydrophobée est un minerai de cuivre sulfuré.

6. Procédé selon l'une quelconque des revendications 1 à 5, **caractérisé en ce que** ladite au moins une troisième substance hydrophile est choisie dans le groupe constitué par les composés métalliques oxydiques et hydroxydiques.

7. Procédé selon l'une quelconque des revendications 1 à 6, **caractérisé en ce que** ladite au moins une particule magnétique est choisie dans le groupe constitué par les métaux magnétiques et leurs mélanges, les alliages ferromagnétiques de métaux magnétiques et leurs mélanges, les oxydes de fer magnétiques, les ferrites cubiques de formule générale (III)
M²⁺ₓFe²⁺₁₋ₓFe³⁺₂O₄ (III)
avec
M choisi parmi Co, Ni, Mn, Zn et leurs mélanges, et
x ≤ 1,
les ferrites hexagonales et leurs mélanges.

8. Procédé selon l'une quelconque des revendications 1 à 7, **caractérisé en ce que** le dispersant à l'étape (A) est de l'eau.

9. Procédé selon l'une quelconque des revendications 1 à 8, **caractérisé en ce que** le mélange contenant au moins une première substance hydrophobe ou hydrophobée, au moins une deuxième substance hydrophobe ou hydrophobée et au moins une troisième substance hydrophile est broyé avant ou pendant l'étape (A) en particules d'une taille de 100 nm à 100 µm.

10. Procédé selon l'une quelconque des revendications 1 à 9, **caractérisé en ce qu'**un agent hydrophobant est ajouté à l'étape (A).
